# NEUE EUROPÄISCHE PATENTSCHRIFT

(11) **EP 2 452 057 B2**
(45) Veröffentlichungstag und Bekanntmachung des Hinweises auf die Entscheidung über den Einspruch: **03.10.2018**
(45) Hinweis auf die Patenterteilung: 16.09.2015
(21) Anmeldenummer: 10742713.0
(22) Anmeldetag: 06.07.2010
(51) Int. Cl.: F01N 13/18, F01N 3/00

(54) **VERFAHREN UND VORRICHTUNG ZUR BEFESTIGUNG EINES ABGASKONVERTERMODULS**
METHOD AND DEVICE FOR FASTENING AN EXHAUST CONVERTER MODULE
PROCÉDÉ ET DISPOSITIF POUR FIXER UN MODULE CONVERTISEUR D'ÉCHAPPEMENT

(30) Priorität: 06.07.2009 DE 102009031980
(43) Veröffentlichungstag der Anmeldung: 16.05.2012
(73) Patentinhaber: Benteler Automobiltechnik GmbH, 33102 Paderborn (DE)
(72) Erfinder: EWERS, Roland, 33102 Paderborn (DE); GABRIEL, Heinrich, 34434 Borgentreich (DE); WEGENER, Mario, 34434 Borgentreich (DE); LESCH, Artur, 32839 Steinheim (DE)
(74) Vertreter: Griepenstroh, Jörg
(86) Internationale Anmeldenummer: PCT/DE2010/000774
(87) Internationale Veröffentlichungsnummer: WO 2011/003395

(56) Entgegenhaltungen:
- DE-A1- 10 147 555
- DE-A1- 10 346 704
- DE-A1- 19 815 705
- DE-U1- 20 109 177
- FR-A1- 2 856 735
- FR-A1- 2 867 252
- GB-A- 2 212 771

## Beschreibung

Die Erfindung betrifft ein Verfahren zur Befestigung eines Abgaskonvertermoduls mit den Merkmalen des Patentanspruchs 1 sowie eine Vorrichtung zur Befestigung eines Abgaskonvertermoduls mit den Merkmalen des Patentanspruchs 3.

Ein Abgaskonvertermodul im Sinne der Erfindung ist ein Teil des Abgasstrangs eines Kraftfahrzeugs, insbesondere ein Katalysator, der neben einem Einlassflansch, einem Auslassflansch mit entsprechenden trichterförmigen Bereichen, einer Umhausung eines Monolithen auch noch einen Hitzeschutzschild und entsprechende Sensoraufnahmen enthalten kann. Es handelt sich somit um eine relativ komplexe Baugruppe mit einem nicht unerheblichen Gewicht und Volumen. Aufgrund der hohen thermischen Belastung können bei der Befestigung derartiger Abgasmodule Dauerhaltbarkeitsprobleme auftreten, die aus thermisch induzierten Spannungen resultieren. Oftmals ist die Montage bzw. Demontage in unmittelbarer Motornähe schwierig.

In der DE 10 2004 023 585 A1 wird beispielsweise eine Katalysatorbefestigung beschrieben, die so ausgebildet ist, dass der Katalysator nicht durch zusätzliche Schweißoperationen mit zusätzlichen Wärmespannungen beaufschlagt wird. Eine Katalysatorbefestigung ist insbesondere im Bereich eines abgasführenden Rohres vorgesehen, das heißt im Abstand von dem eigentlichen Katalysator, so dass sich dieser ungehindert in X-, Y- und Z-Richtungen elastisch ausdehnen kann. Nachteilig ist allerdings, dass das relativ hohe Gewicht des Katalysators in eine Entfernung vom Katalysator angeordnete Befestigung eingeleitet werden muss, was insbesondere aus schwingungstechnischer Sicht eine hinreichend stabile Befestigung notwendig macht.

Aus der DE 10 2006 010 973 A1 ist eine Vorrichtung zum Aufhängen des Teils einer Abgasanlage eines Kraftfahrzeugs bekannt, die eine Tragstruktur mit einer Schwenklagerung umfasst. An der Schwenklagerung kann ein elastisches Hängeteil montiert werden. Die Aufhängevorrichtung soll dazu beitragen, unterschiedlichste Belastungsanforderungen leicht einzustellen und insbesondere die Instandsetzung zu erleichtern, ohne den Grundaufbau der Aufhängevorrichtung, insbesondere zusätzlich vorgesehener Elastomerkörper grundsätzlich abändern zu müssen. Bei der Tragstruktur handelt es sich insbesondere um ein Druckgussteil aus Aluminium oder um ein Kunststoffteil, mit relativ komplexer und damit fertigungstechnisch aufwendiger Geometrie. Mittels mehrerer derartiger Tragstrukturen ist zwar eine toleranzausgleichende Befestigung möglich, was insbesondere im Hinblick auf die Schwingungsdämpfung zweckmäßig ist, allerdings reicht dies bei der Fixierung eines Abgaskonvertermoduls, das ein relativ hohes Gewicht und extrem thermischen Belastungen unterliegt, für sich allein nicht aus.

Zum Stand der Technik ist auf die GB 2 212 771 A hinzuweisen, welche eine Vorrichtung zur Befestigung eines Abgasschalldämpfermoduls an einem Verbrennungsmotor eines Fahrzeugs offenbart. Es ist ein Motorhalter vorgesehen, der mit dem Verbrennmotor verbunden ist. Ferner gibt es einen passenden Modulhalter, der mit dem Abgasschalldämpfermodul verbunden ist. Eine Einlassöffnung des Abgasschalldämpfermoduls ist mit einem in Krümmungsrichtung des Abgases vorgelagerten Leitungsabschnitts des Abgasstrangs koppelbar. Das Abgasdämpfermodul und der Leitungsabschnitt definieren eine Schwenkachse, um welche das Abgasdämpfermodul gegenüber dem Leitungsabschnitt eine Montageposition schwenkbar ist. In der Montageposition liegt der Modulhalter an dem Motorhalter an. Die Verbindung erfolgt über eine Schraubverbindung mit dem Motorhalter.

Die Verbindung erlaubt eine Vielzahl von Freiheitsgraden, da auch der Modulhalter eine axiale Verdrehung um die Längsachse des Abgasschalldämpfers ermöglicht. Die Vielzahl von Freiheitsgraden ermöglicht eine sehr exakte Ausrichtung, die allerdings montagetechnisch aufwendig sein kann.

Zum Stand der Technik zählt ferner die FR 2 867 252 A, bei welcher ein Abgaskonvertermodul über eine schwenkbare Flanschverbindung fixiert ist, was die Montage erleichtern soll. Auch die gegenteilige Befestigungstechnik, die eine möglichst starre und feste Anbindung schafft, zählt zum Stand der Technik (FR 2 856 735 A). Jede der möglichen Befestigungstechniken hat ihre, auf den jeweiligen Anwendungsfall bezogenen Vorzüge, wobei sich nicht immer ein besonders montagefreundliches Verfahren ergibt, mittels welchem das Abgaskonvertermodul an einem Verbrennungsmotor befestigt werden kann.

Hiervon ausgehend liegt der Erfindung die Aufgabe zugrunde, einerseits ein montagefreundliches Verfahren aufzuzeigen, um ein Abgaskonvertermodul an einem Verbrennungsmotor eines Kraftfahrzeug zu befestigen, und ferner eine entsprechende Vorrichtung zur Befestigung eines Abgaskonvertermoduls aufzuzeigen, mit der es möglich ist, eine hinreichend steife, aber gleichzeitig toleranzausgleichende Fixierung des Abgaskonvertermoduls zu ermöglichen.

Diese Aufgabe wird erfindungsgemäß durch die Merkmale des Patentanspruchs 1 gelöst. Weiterbildungen sind Gegenstand der Unteransprüche.

Zunächst wird ein Motorhalter an einem Verbrennungsmotor befestigt. Der Begriff Verbrennungsmotor umfasst als Kernkomponente den Motorblock. Es ist aber auch denkbar, dass der Motorhalter mittelbar mit dem Verbrennungsmotor über entsprechende Konsolen oder Anbauteile verbunden ist. Der Begriff Motorhalter bedeutet, dass es sich um einen motorseitigen Halter handelt.

Das Gegenstück zum Motorhalter ist der Modulhalter, der an dem Abgaskonvertermodul befestigt ist. Vorzugsweise ist er mit diesem stoffschlüssig verbunden, insbesondere verschweißt. Der Motorhalter und der Modulhalter sind die Kernkomponenten, die zur Befestigung des Abgaskonvertermoduls erforderlich sind.

Bei der Montage wird der Abgaskonverter mit seiner Einlassöffnung mit einem in Strömungsrichtung des Abgases vorgelagerten Leitungsabschnitt des Abgasstrangs verbunden. Bei diesem Leitungsabschnitt kann es sich beispielsweise um einen Abgasauslass einer Auflademaschine, insbesondere eines Turboladers, handeln. Nachdem das Abgaskonvertermodul mit der Einlassöffnung locker verbunden ist, wird das Abgaskonvertermodul um eine Schwenkachse geschwenkt, die durch die Orientierung der Einlassöffnung des Abgaskonvertermoduls bestimmt wird. Die Schwenkachse steht insbesondere senkrecht zur Einlassöffnung. Ein Zentrierabsatz an der Einlassöffnung sorgt im Eingriff mit dem vorhergehenden Leitungsabschnitt für die notwendige axiale und radiale Zentrierung.

Durch das Verschwenken wird das Abgaskonvertermodul mit dem Modulhalter dem vormontierten Motorhalter angenähert, so dass das Abgaskonvertermodul in eine Montageposition gelangt, in welcher der Modulhalter mit dem Motorhalter verbunden wird. Die Verbindung erfolgt durch Verschrauben. Beim Verschrauben wird zunächst ein vom Motorhalter abstehender Bolzen, der beim Verschwenken in die Montageposition in einen Durchbruch des Modulhalters greift, dazu genutzt, eine Mutter aufzuschrauben. Die Mutter wird noch nicht auf das Enddrehmoment angezogen. Eine zweite Schraubverbindung basiert auf einer Nut an dem Motorhalter, in welche ein Schraubbolzen, der an dem Modulhalter gehalten ist, verschwenkt wird. Auch dieser Bolzen wird zunächst durch eine Mutter gesichert. Das Aufschrauben der Muttern kann per Hand erfolgen. Das Anziehen der Muttern auf ein Enddrehmoment erfolgt erst nachdem das Abgaskonvertermodul richtig positioniert worden ist.

Ein Spielausgleich ist dadurch möglich, dass die Schraubverbindungen gewissermaßen kreuzweise angeordnete Langlöcher vorsehen. Mit anderen Worten sind die Schrauben am Motorhalter und am Modulhalter jeweils in Langlöchern gelagert, wobei diese Langlöcher nicht die gleiche Orientierung haben. Dadurch, dass sich die Orientierungen der Langlöcher kreuzen, und zum anderen dadurch, dass die Orientierung der Bolzen nicht deckungsgleich ist, kann in gewissem Umfang eine räumliche Verlagerung des Abgaskonvertermoduls vorgenommen werden, um Toleranzen bei der Montage auszugleichen. Erst wenn sich das Abgaskonvertermodul in der richtigen Position befindet, werden die beiden Schraubverbindungen auf das Enddrehmoment angezogen. Die Bolzen müssen hierbei nur von einer Seite zugänglich sein. Es handelt sich vorzugsweise um Bolzen, deren Bolzenkopf in einem Käfig geführt ist. Der Käfig verhindert, dass sich die Bolzen beim Anziehen der Muttern mitdrehen. Zudem werden die Bolzen durch die Käfige unverlierbar an dem Motorhalter bzw. dem Modulhalter gehalten.

Selbstverständlich wird die verschwenkbare Einlassöffnung des Abgaskonvertermoduls fest mit dem vorhergehenden Leitungsabschnitt verbunden, insbesondere durch einen kraftschlüssigen Verbund, der zum Beispiel durch eine die beiden Leitungsabschnitte umgebende Rohrschelle erfolgt, über welche die Bauteile miteinander verspannt werden.

Der gegenständliche Teil der Erfindung wird durch eine Vorrichtung mit den Merkmalen des Patentanspruchs 3 gelöst, welche durch die in den Unteransprüchen angegebenen Merkmale in vorteilhafterweise weitergebildet wird.

Die erfindungsgemäße Vorrichtung umfasst wie vorstehend ausgeführt einen Motorhalter, der mit dem Verbrennungsmotor verbunden ist und einen zum Motorhalter passenden Modulhalter, der mit dem Abgaskonvertermodul verbunden ist. Eine Einlassöffnung des Abgaskonvertermoduls ist mit einem in Strömungsrichtung des Abgases vorgelagerten Leitungsabschnittes des Abgasstrangs koppelbar. Dabei definiert das Abgaskonvertermodul und der Leitungsabschnitt eine Schwenkachse S, um welche das Abgaskonvertermodul gegenüber dem Leitungsabschnitt bzw. gegenüber dem Verbrennungsmotor in eine Montageposition schwenkbar ist. In der Montageposition liegt der Modulhalter an dem Motorhalter an. In dieser Position werden der Modulhalter und der Motorhalter über mindestens eine Schraubverbindung miteinander verschraubt.

Die Erfindung wird nachfolgend anhand eines in den Zeichnungen dargestellten Ausführungsbeispiels näher erläutert. Es zeigt:
- Figur 1: eine Abfolge von Arbeitsschritten zur Befestigung eines Abgaskonvertermoduls an einem Verbrennungsmotor;
- Figur 2: eine vergrößerte Darstellung des Motorhalters und des Modulhalters in der Montageposition;
- Figur 3: eine perspektivische Darstellung des Motorhalters und
- Figuren 4 bis 6: drei weitere perspektivische Darstellungen des Motorhalters mit angesetztem Modulhalter.

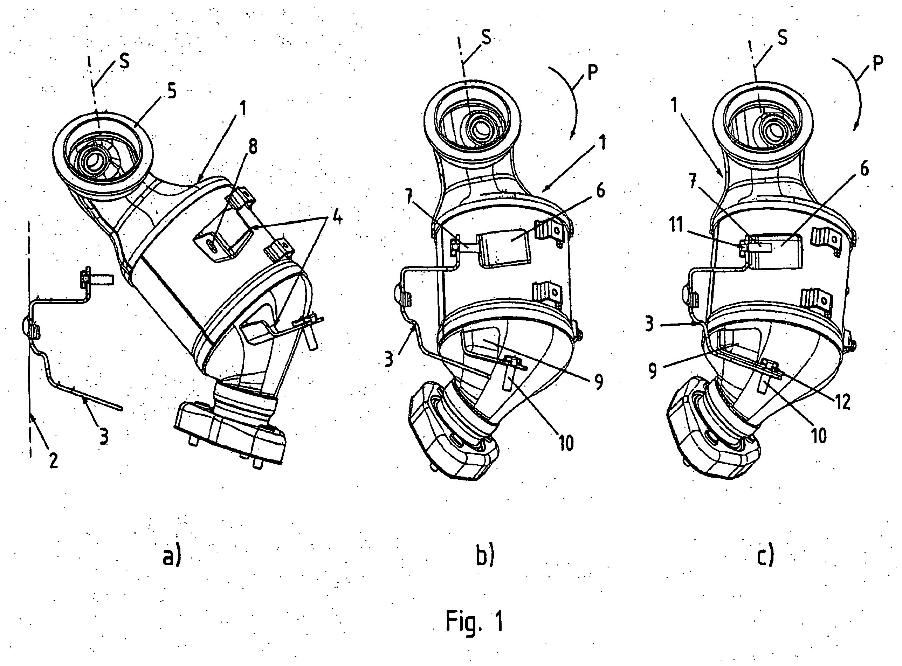

Figur 1 zeigt in drei zeitlich aufeinander folgenden Fertigungsschritten den prinzipiellen Ablauf der Montage eines Abgaskonvertermoduls 1. Bevor das Abgaskonvertermodul 1 mit einem nur andeutungsweise eingezeichneten Verbrennungsmotor 2 verbunden werden kann, wird zunächst ein Motorhalter 3 schraubtechnisch mit dem Verbrennungsmotor 2 verbunden. Ein zu dem Motorhalter 3 passender, zweiteilig ausgebildeter Modulhalter 4 wurde zuvor mit dem Abgaskonvertermodul 1 verschweißt. Das so vormontierte Abgaskonvertermodul 1 wird zunächst mit seiner Einlassöffnung 5 an einem vorgelagerten, nicht näher dargestellten Leitungsabschnitt des Abgasstrangs montiert. Bei diesem Leitungsabschnitt handelt es sich insbesondere um den Ausgang eines Abgasturboladers, der motornah im Bereich des Zylinderkopfes des Verbrennungsmotors 2 befestigt ist. Die Einlassöffnung 5 ist mit einem ringförmigen Flanschkragen versehen, so dass das gesamte Abgaskonvertermodul 1 um eine Schwenkachse S verschwenkt werden kann, wenn das Abgaskonvertermodul 1 bzw. dessen Einlassöffnung 5 bereits gegenüber dem vorhergehenden Leitungsabschnitt positioniert ist. Der Leitungsabschnitt und die Einlassöffnung 5 definieren zusammen die Schwenkachse S, um welche das Abgaskonvertermodul 1 gegenüber dem Leitungsabschnitt und damit letztlich auch gegenüber dem Verbrennungsmotor 2 verschwenkbar ist. In praktischer Umsetzung wird die Einlassöffnung 5 über eine klemmend wirkende Rohrschelle mit dem vorhergehenden Leitungsabschnitt verbunden. Die Rohrschelle wird jedoch noch nicht festgezogen, so dass ein Verschwenken des Abgaskonvertermoduls 1 gegenüber dem Motorhalter 3 möglich ist.

Figur 1b) zeigt, wie das Abgaskonvertermodul 1 bereits in Richtung des Pfeils P um die Schwenkachse S verschwenkt worden ist. Hierbei gelangt ein oberer Halter 6 des Modulhalters 4 mit einem von dem Motorhalter 3 abstehenden Bolzen 7 in Kontakt. Der Bolzen 7 greift in einen als Langloch ausgebildeten Durchbruch 8 im oberen Halter 6.

Es ist zu erkennen, dass in dieser Position noch kein Kontakt zwischen dem unteren Halter 9 und dem Motorhalter 3 besteht. Unter einem unteren Halter 9 im Sinne der Erfindung ist derjenige Halter zu verstehen, der weiter entfernt von der Einlassöffnung 5 des Abgaskonvertermoduls 1 angeordnet ist als der obere Halter 6. Der obere Halter 6 befindet sich in einem mittleren Gehäusebereich des Abgaskonvertermoduls 1, während der untere Halter 9 an einem sich trichterförmig verjüngenden Auslasskanal des Abgaskonvertermoduls 1 angeordnet ist.

Figur 1c) zeigt, dass beim weiteren Verschwenken in Richtung des Pfeils P schließlich auch der untere Halter 9 an dem Motorhalter 3 zur Anlage gelangt. Dabei greift ein schräg nach unten abstehender Bolzen 10 des unteren Halters 9 in eine randseitige Nut 21 des Motorhalters ein, wie anhand der nachfolgenden Figuren deutlich wird. In dieser Position kann das Abgaskonvertermodul 1 fixiert werden.

Wichtig für die Fixierung ist, dass durch das Zusammenstecken der Einlassöffnung 5 mit dem vorhergehenden Leitungsabschnitt bereits eine Orientierung in Umfangsrichtung der Einlassöffnung als auch in Axialrichtung der Einlassöffnung erfolgt. Mit anderen Worten ist das Abgaskonvertermodul durch die Position der Einlassöffnung in Radialrichtung und Axialrichtung der Einlassöffnung 5 lagebestimmt. Der Motorhalter 3 und der Modulhalter 4 dienen primär dazu, die von der Einlassöffnung vorgegebene Orientierung gegenüber dem Verbrennungsmotor 2 zu fixieren und das relativ hohe Gewicht des Abgaskonvertermoduls 1 aufzufangen. Daher findet der Toleranzausgleich zwischen dem Motorhalter 3 und dem Modulhalter 4 statt und nicht an der Einlassöffnung.

Nachdem nun das Abgaskonvertermodul 1 durch den Zentriereinsatz in Axial- und Radialrichtung orientiert ist und in Richtung des Motorhalters geschwenkt wurde, werden nicht näher dargestellte Muttern auf die Befestigungsbolzen 7, 10 gesetzt. Die Muttern werden zunächst per Hand angezogen. Anschließend wird die die Einlassöffnung 5 des Abgaskonvertermoduls 1 fixierende Rohrschelle auf das Enddrehmoment angezogen. Dann wird der Bolzen 7 am oberen Halter 6 auf das Enddrehmoment angezogen. Schließlich wird die Mutter am unteren Bolzen 10 auf das Enddrehmoment angezogen. Damit ist der Montageprozess abgeschlossen. Wesentlich bei dieser Montage ist, dass die entfernt voneinander liegende Schraubverbindungen 11, 12 der am oberen und unteren Halter 6, 9 sowohl Bolzen 7, 10 in räumlich unterschiedlichen Orientierungen vorsehen als auch voneinander abweichend orientierte Befestigungsflächen. Dadurch ist es möglich, Kräfte aufzufangen, die aus unterschiedlichen Richtungen angreifen, und gleichzeitig das Abgaskonvertermodul 1 sicher und vor allen Dingen montagetechnisch einfach zu fixieren.

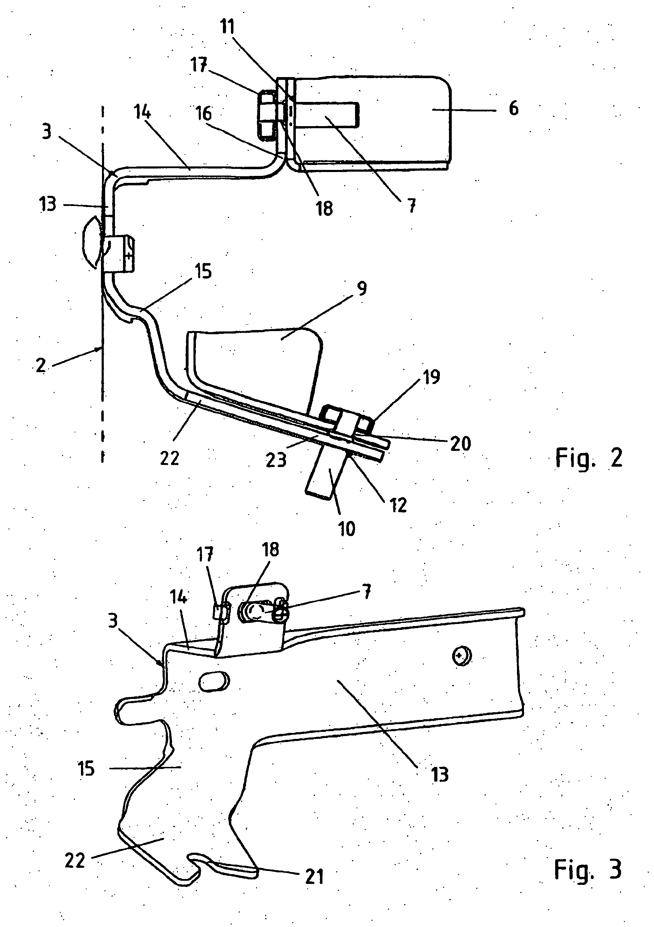

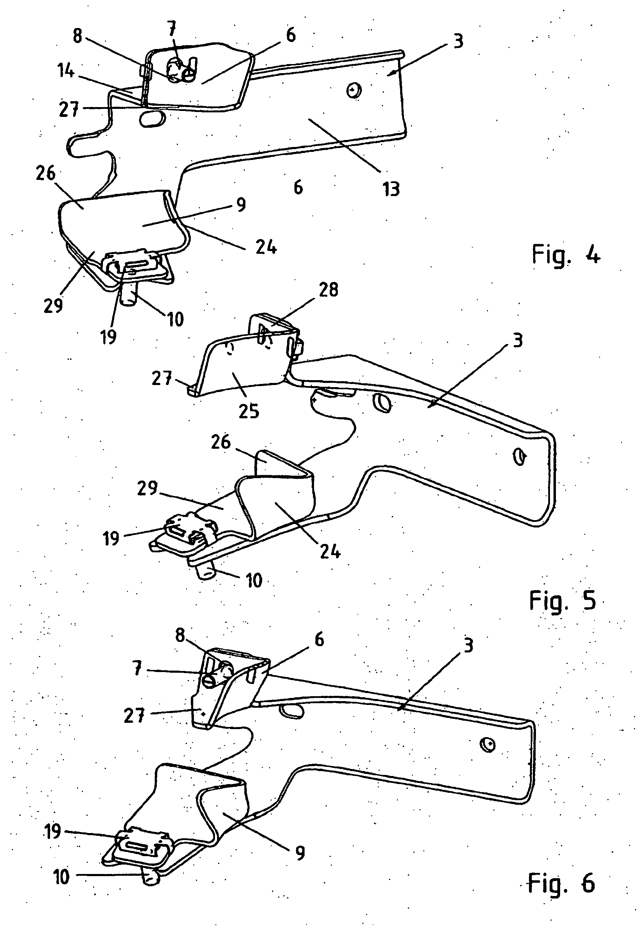

Figur 2 zeigt in vereinfachter Darstellung der Figur 1c, wie der Motorhalter 3 in der Montagelage mit dem oberen Halter 6 und dem unteren Halter 9 des Modulhalters 4 gekoppelt ist. Es ist zu erkennen, dass der Motorhalter 3 im Wesentlichen U-förmig konfiguriert ist und ein Rückenteil 13 umfasst, das zur Befestigung des Motorhalters 3 an dem Verbrennungsmotor 2 dient. Gegenüber diesem Rückenteil 13 sind jeweils obere und untere Anbindungslaschen 14, 15 abgewinkelt, an deren Endbereichen 16, 23 die Schraubverbindungen 11, 12 vorgesehen sind. Die in der Bildebene obere Anbindungslasche 14 ist im rechten Winkel gegenüber dem Rückenteil 13 abgewinkelt, wohingegen ihr Endbereich 16 nochmals um 90° gegenüber der Anbindungslasche 14 abgewinkelt ist und somit wiederum parallel zum Rückenteil 13 verläuft. In diesem Endbereich 16 befindet sich der Schraubbolzen 7, der über einen so genannten Käfig 17 an dem Endbereich 16 gehalten ist. Der Käfig verhindert ein Mitdrehen des Bolzens 7 beim Ansetzen und Anziehen einer nicht näher dargestellten Mutter. Zudem kann sich der Bolzen 7 innerhalb eines Langlochs 18 verschieben, dessen Längsachse in der Darstellung der Figur 2 senkrecht zur Bildebene steht. Aus einem Vergleich der Figuren 3 und 4 wird deutlich, dass das Langloch 18 im Endbereich 16 im rechten Winkel zu dem als Langloch ausgeführten Durchbruch 8 im oberen Halter 6 steht. Dadurch kann sich der obere Halter 6 und damit auch das gesamte Abgaskonvertermodul nicht nur in Richtung des Langlochs 18 ausrichten, sondern zudem auch noch in Richtung des Langlochs 18 des Motorhalters 3.

Das gleiche Prinzip kommt bei dem unteren Halter 9 zum Tragen. Auch dort ist der Bolzen 10 der Schraubverbindung 12 über einen Käfig 19 gehalten. Der Käfig 19 befindet sich hierbei am unteren Halter 9. Der Bolzen 7 weist nach unten, d. h. vom oberen Halter 6 weg. Das Langloch 20, das von dem Bolzen 10 durchsetzt wird, erstreckt sich ebenso wie das Langloch 18 in der Darstellung der Figur 2 aus der Bildebene heraus bzw. in diese hinein. Anders als bei der Schraubverbindung 11 am oberen Halter 6 ist jedoch am unteren Halter 9 kein zweites Langloch im Motorhalter 3 vorgesehen, sondern vielmehr eine randseitige Nut 21, wie sie am besten in Figur 3 zu erkennen ist. Die Orientierung der Nut 21 verläuft wiederum quer zur Orientierung des Langlochs 20. Dadurch kann das Abgaskonvertermodul 1 auch hier toleranzausgleichend und klemmungsfrei über die zweite Schraubverbindung 12 mit dem Motorhalter 3 verbunden werden.

Es ist zu erkennen, dass mündungsseitig der Nut 21 eine deltaförmige Erweiterung der Nutwangen vorgesehen ist. Diese erweiterten Nutwangen dienen als Einführschräge für den Bolzen 10, der auf den Nutwangen entlang gleitet und zentriert in die Nut 21 hineingleitet.

In Figur 2 ist zu erkennen, dass die untere Anbindungslasche 15 nicht parallel zur oberen Anbindungslasche 14 verläuft, sondern im Winkel zu oberen Anbindungslasche 14 und insbesondere auch im Winkel zum Endbereich 16 steht. Die untere Anbindungslasche 15 weist somit eine Schräge 22 auf, auf welche der untere Halter 9 beim Verschwenken in die Montageposition aufläuft, bevor der Bolzen 10 in die Nut 21 fasst. Die Schräge 22 dient als wesentliche Stützfläche des Abgaskonvertermoduls 1. Die Schräge 22 ist allerdings auch hilfreich bei der Montage, denn wenn das Abgaskonvertermodul etwas zu tief sitzt, gleitet der untere Halter 6 auf der Schräge 22 gewissermaßen nach oben, wodurch auch der obere Halter 6 und damit das gesamte Abgaskonvertermodul 1 angehoben wird, bis die Endposition und damit die richtige Höhe erreicht ist.

Die Schräge 22 befindet sich in einem motornahen Bereich, während die Nut 21 im äußeren Endbereich 23 angeordnet ist. Dadurch wird der Bolzen 10 vom unteren Halter 9 gewissermaßen in die Nut 21 mitgeschleppt und beim Zusammenfügen nicht vor dem unteren Halter 9 hergeschoben. Auf diese Weise wird der zwischen der Verschraubung 12 und dem Rückenteil 13 des Motorhalters 3 vorhandene Bauraum effektiv zur Abstützung ausgenützt, ohne den zum Anziehen der Verschraubung 12 notwendigen Montageraum zu begrenzen.

Die Figuren 4 bis 6 zeigen nochmals die Anordnung der Figur 2 in unterschiedlichen perspektivischen Darstellungen, aus denen alle Einzelheiten des zweiteiligen Modulhalters 4 bzw. des Motorhalters 3 hervorgehen. Es ist zu erkennen, dass der Motorhalter 3 hinsichtlich seiner Dimensionierung wesentlich größer bemessen ist als die zwei kleineren Halter 6, 9 des Modulhalters 4. Das langgestreckte Rückenteil 13 des Motorhalters 3 weist zwei Bohrungen auf, wobei die in der Bildebene der Figur 4 linke Bohrung als Langloch ausgeführt ist. Das Langloch ist im Wesentlichen horizontal orientiert, so dass die Höhenlage des Motorhalters 3 bestimmt ist. Der weitere Toleranzausgleich zwischen Motorhalter 3 und Modulhalter 4 erfolgt über die entsprechenden Langlöcher bzw. Nuten in dem Motorhalter 3 bzw. dem Modulhalter 4.

Die oberen und unteren Anbindungslaschen 14, 15 des Motorhalters 3 befinden sich gemeinsam an dem in der Bildebene linken Ende des Motorhalters. An diesem Ende befindet sich auch eine aus der Ebene des Rückenteils 13 in Richtung der Anbindungslaschen 14, 15 leicht ausgestellte Fixierlasche 30, die zur Befestigung weiterer Anbauteile dienen kann.

Es ist ferner zu erkennen, dass der obere Halter 6 ebenso wie der untere Halter 9 jeweils eine Anschweißlasche 24, 25 aufweist, über welche die Halter 6, 9 mit dem Abgaskonvertermodul 1 verschweißt werden, sowie eine jeweils gegenüber der Anschweißlasche 24, 25 abgewinkelte Seitenwand 26, 27, die zur Aussteifung der Anschweißlaschen 24, 25 gegenüber den eigentlichen Stützseiten 28, 29 dient, die entweder einen Bolzen 10 tragen oder von einem Bolzen 7 durchsetzt werden. Durch die Anschweißlaschen 24, 25, die hierzu im Winkel stehenden Stützseiten 28, 29 und die aussteifenden Seitenwände 26, 27, die wiederum im Winkel zu den Stützseiten 28, 29 und den Anschweißlaschen 24, 25 stehen, ergeben sich dreidimensional geformte obere und untere Halter 6, 9, die auch bei geringeren Wandstärken steif genug sind, das Abgaskonvertermodul 1 sicher mit dem Motorhalter 3 zu koppeln. Die Halter 6, 9, d. h. der Modulhalter 4 sowie der Motorhalter 3, sind Blechbauteile.

### Bezugszeichen:

- 1 -: Abgaskonvertermodul
- 2 -: Verbrennungsmotor
- 3 -: Motorhalter
- 4 -: Modulhalter
- 5 -: Einlassöffnung
- 6 -: oberer Halter
- 7 -: Bolzen
- 8 -: Durchbruch
- 9 -: unterer Halter
- 10 -: Bolzen
- 11 -: Schraubverbindung
- 12 -: Schraubverbindung
- 13 -: Rückenteil
- 14 -: Anbindungslasche
- 15 -: Anbindungslasche
- 16 -: Endbereich
- 17 -: Käfig
- 18 -: Langloch
- 19 -: Käfig
- 20 -: Langloch
- 21 -: Nut
- 22 -: Schräge
- 23 -: Endbereich
- 24 -: Anschweißlasche
- 25 -: Anschweißlasche
- 26 -: Seitenwand
- 27 -: Seitenwand
- 28 -: Stützseite
- 29 -: Stützseite
- 30 -: Fixierlasche
- P -: Pfeil
- S -: Schwenkachse

## Patentansprüche

1. Verfahren zur Befestigung eines Abgaskonvertermoduls (1) in Form eines Abgaskatalysators an einem Verbrennungsmotor (2) eines Kraftfahrzeugs mit folgenden Schritten:
a) Befestigung eines Motorhalters (3) an dem Verbrennungsmotor (2);
b) Befestigung eines Modulhalters (4) an dem Abgaskonvertermodul (1),
c) Verbinden einer Einlassöffnung (5) des Abgaskonvertermoduls (1) mit einem in Strömungsrichtung des Abgases vorgelagerten Leitungsabschnitt des Abgasstrangs, wobei das Abgaskonvertermodul (1) und der Leitungsabschnitt eine Schwenkachse (S) definieren, um welche das Abgaskonvertermodul (1) gegenüber dem Leitungsabschnitt schwenkbar ist;
d) Verschwenken des Abgaskonvertermoduls (1) um die Schwenkachse (S), wobei der Modulhalter (4) und der Motorhalter (3) in eine Montageposition gelangen, in welcher der Modulhalter (4) mit dem Motorhalter (3) verbunden wird;
e) Das Abgaskonvertermodul (1) wird verdrehfest mit dem Leitungsabschnitt verbunden;
f) Die Verbindung zwischen dem Modulhalter (4) und dem Motorhalter (3) wird von Schraubverbindungen (11, 12) gebildet, welche nach dem verdrehfesten Verbinden des Abgaskonvertermoduls (1) auf ein Enddrehmoment angezogen werden, wobei eine erste Schraubverbindung (11) einen vom Motorhalter (3) abstehenden Bolzen (7) umfasst, der beim Verschwenken in die Montageposition in einen Durchbruch (8) des Modulhalters (4) greift, wobei der Modulhalter (4) im ersten Schritt durch Aufschrauben einer Mutter auf den Bolzen (7) lageorientiert wird, bevor die Mutter auf einen Enddrehmoment angezogen wird und wobei eine Schraubverbindung (12) einen an dem Modulhalter (4) vorstehenden Bolzen (10) umfasst, welcher beim Verschwenken in eine Nut (21) des Motorhalters (3) verlagert wird, wobei der Bolzen (10) des Modulhalters (4) mittels einer Mutter mit dem Motorhalter (3) verschraubt wird.

2. Verfahren nach Anspruch 1, **dadurch gekennzeichnet, dass** der Leitungsabschnitt und das Abgaskonvertermodul (1) von einer diese beiden Bauteile umgebenden Schelle gegeneinander gepresst werden.

3. Vorrichtung zur Befestigung eines Abgasmoduls an einem Verbrennungsmotor (1) eines Kraftfahrzeugs umfassend einen Motorhalter (3), der mit dem Verbrennungsmotor (1) verbunden ist, und einen zum Motorhalter (3) passenden Modulhalter (4), der mit dem Abgasmodul (1) verbunden ist, wobei eine Einlassöffnung (5) des Abgasmoduls (1) mit einem in Strömungsrichtung des Abgases vorgelagerten Leitungsabschnitt des Abgasstrangs koppelbar ist, wobei das Abgasmodul (1) und der Leitungsabschnitt eine Schwenkachse (S) definieren, um welche das Abgasmodul (1) gegenüber dem Leitungsabschnitt in eine Montageposition schwenkbar ist, in welcher der Modulhalter (4) an dem Motorhalter (3) anliegt und in welcher der Modulhalter (4) über mindestens eine Schraubverbindung (11, 12) mit dem Motorhalter (3) verschraubbar ist, **dadurch gekennzeichnet, dass** eine erste Schraubverbindung (11) einen vom Motorhalter (3) abstehenden Bolzen (7) umfasst, welcher in der Montagelage einen Durchbruch (8) des Modulhalters (4) durchsetzt, um über eine Mutter mit dem Modulhalter (4) verschraubt zu werden und wobei das Abgasmodul (1) ein Abgaskonvertermodul in Form eines Abgaskatalysators ist, wobei eine weitere Schraubverbindung (12) einen an dem Modulhalter (4) vorstehenden Bolzen (10) umfasst, welcher beim Verschwenken in eine randseitige Nut (21) des Motorhalters (3) greift und durch eine Mutter mit dem Motorhalter (3) verschraubbar ist, wobei die Bolzen (7, 10) in unterschiedliche Raumrichtungen weisen.

4. Vorrichtung nach Anspruch 3, **dadurch gekennzeichnet, dass** der Durchbruch (8) als Langloch konfiguriert ist.

5. Vorrichtung nach einem der Ansprüche 3 oder 4, **dadurch gekenn zeichnet, dass** der Modulhalter (4) zweiteilig ausgebildet ist und entfernt von einem oberen Halter (6) einen unteren Halter (9) aufweist.

6. Vorrichtung nach Anspruch 5, **dadurch gekennzeichnet, dass** die Halter (6, 9) stoffschlüssig mit dem Abgaskonvertermodul (1) verbunden sind.

7. Vorrichtung nach einem der Ansprüche 3 bis 6, **dadurch gekenn zeichnet**, **dass** die Bolzen (7, 10) in Langlöchern (18, 20) angeordnet sind.

8. Vorrichtung nach Anspruch 7, **dadurch gekennzeichnet, dass** die die Bolzen (7, 10) haltenden Langlöcher (18, 20) eine andere Orientierung besitzen als der als Langloch konfigurierte Durchbruch (8) im Modulhalter (4) und die Nut (21) im Motorhalter (3).

9. Vorrichtung nach Anspruch 7 oder 8, **dadurch gekennzeichnet, dass** die Bolzen (7, 10) von Käfigen (17, 19) unverlierbar in den Langlöchern (18, 20) gehalten werden, wobei die Käfige (17, 19) so konfiguriert sind, dass die Bolzen (7, 10) in Längsrichtung der Langlöcher (18, 20) verlagerbar sind.

10. Vorrichtung nach einem der Ansprüche 3 bis 9, **dadurch gekennzeichnet, dass** der Motorhalter (3) im wesentlichen U-förmig konfiguriert ist, mit einem Rückenteil (13), das zur Befestigung des Motorhalters (3) an dem Verbrennungsmotor (2) dient und mit gegenüber dem Rückenteil (13) abgewinkelten Anbindungslaschen (14, 15), an deren Endbereichen(16, 23) die Schraubverbindungen (11, 12) vorgesehen sind.

11. Vorrichtung nach Anspruch 10, **dadurch gekennzeichnet, dass** die Anbindungslasche (15) die endseitige Nut (21) für den Bolzen (10) des unteren Halters des Modulhalters (4) aufweist sowie eine Schräge (22), auf der der untere Halter (9) beim Verschwenken in die Montageposition aufläuft, bevor der Bolzen (10) in die Nut (21) fasst.

## Claims

1. Method for fastening an exhaust gas converter module (1), in the form of a catalytic converter, to an internal combustion engine (2) of a motor vehicle, comprising the following steps:
a) fastening an engine mount (3) to the internal combustion engine (2),
b) fastening a module mount (4) to the exhaust gas converter module (1);
c) connecting an inlet opening (5) of the exhaust gas converter module (1) to a pipe section, arranged upstream in the flow direction of the exhaust gas, of the exhaust gas system, wherein the exhaust gas converter module (1) and the pipe section define a pivot axis (S), about which the exhaust gas converter module (1) can be pivoted relative to the pipe section,
d) pivoting the exhaust gas converter module (1) about the pivot axis (S), wherein the module mount (4) and the engine mount (3) reach an installation position, in which the module mount (4) is connected to the engine mount (3),
e) the exhaust gas converter module (1) is rotationally fixed to the pipe section,
f) the connection between the module mount (4) and the engine mount (3) is formed by screw connections (11, 12) which are tightened to a final torque once the exhaust gas converter module (1) has been rotationally fixed, wherein a first screw connection (11) comprises a bolt (7) which protrudes from the engine mount (3) and engages in an aperture (8) in the module mount (4) when pivoting into the assembled position, wherein the module mount (4) is correctly aligned in the first step by screwing a nut on the bolt (7) before the nut is screwed to a final torque and wherein a screw connection (12) comprises a bolt (10) which protrudes on the module mount (4) and is moved into a groove (21) of the engine mount (3) during pivoting, wherein the bolt (10) of the module mount (4) is screwed by means of nut to the engine mount (3).

2. Method according to claim 1, **characterised in that** the pipe section and the exhaust gas converter module (1) are pressed against one another by a clamp surrounding both components.

3. Device for fastening an exhaust gas module to an internal combustion engine (1) of a motor vehicle, comprising an engine mount (3) connected to the internal combustion engine (1), and a module mount (4) which matches the engine mount (3) and is connected to the exhaust gas module (1), it being possible to couple an inlet opening (5) of the exhaust gas module (1) to a pipe section, arranged upstream in the flow direction of the exhaust gas, of the exhaust gas system, the exhaust gas module (1) and the pipe section defining a pivot axis (S), about which the exhaust gas module (1) can be pivoted relative to the pipe section into an assembled position in which the module mount (4) abuts against the engine mount (3) and in which the module mount (4) can be screwed to the engine mount (3) by means of at least one screw connection (11, 12), **characterised in that** a first screw connection (11) comprises a bolt (7) which protrudes from the engine mount (3) and passes through an aperture (8) in the module mount (4) when assembled, in order to be bolted to the module mount (4) by means of a nut, and the exhaust gas module (1) being an exhaust gas converter module in the form of catalytic converter, wherein an additional screw connection (12) comprises a bolt (10) which protrudes on the module mount (4) and engages in a peripheral groove (21) of the engine mount (3) during pivoting and can be bolted to the engine mount (3) by means of a nut, the bolts (7, 10) pointing in different spatial directions.

4. Device according to claim 3, **characterised in that** the aperture (8) is designed as a slot.

5. Device according to any of claims 3 or 4, **characterised in that** the module mount (4) is constructed in two parts and comprises a lower mount (9) which is remote from an upper mount (6).

6. Device according to claim 5, **characterised in that** the mounts (6, 9) are integrally bonded to the exhaust gas converter module (1).

7. Device according to any of claims 3 to 6, **characterised in that** the bolts (7, 10) are arranged in slots (18, 20).

8. Device according to claim 7, **characterised in that** the slots (18, 20) retaining the bolts (7, 10) have an orientation different from the aperture (8), which is designed as a slot, in the module mount (4) and the groove (21) in the engine mount (3).

9. Device according to any of claims 7 or 8, **characterised in that** the bolts (7, 10) are captively held in the slots (18, 20) by cages (17, 19), the cages (17, 19) being designed such that the bolts (7, 10) can be moved in the longitudinal direction of the slots (18, 20).

10. Device according to any of claims 3 to 9, **characterised in that** the engine mount (3) is substantially U-shaped, having a rear part (13) which is used to fasten the engine mount (3) to the internal combustion engine (2) and connecting tabs (14, 15) which are angled with respect to the rear part (13) and on the end regions (16, 23) of which screw connections (11, 12) are provided.

11. Device according to claim 10, **characterised in that** the connecting tab (15) comprises the groove (21) on the end face for the bolt (10) of the lower mount of the module mount (4) and a bevel (22), on which the lower mount (9) runs when pivoting into the assembled position, before the bolt (10) engages in the groove (21).

## Revendications

1. Procédé de fixation d'un module convertisseur de gaz d'échappement (1) sous forme de catalyseur de gaz d'échappement à un moteur à combustion (2) d'un véhicule automobile, comprenant les étapes suivantes :
a) fixation d'un support côté moteur (3) sur le moteur à combustion (2) ;
b) fixation d'un support côté module (4) sur le module convertisseur de gaz d'échappement (1) ;
c) raccordement d'un orifice d'entrée (5) du module convertisseur de gaz d'échappement (1) à un tronçon de conduite de la ligne d'échappement qui est situé en amont dans le sens d'écoulement du gaz d'échappement, le module convertisseur de gaz d'échappement (1) et le tronçon de conduite définissant un axe de pivotement (S) autour duquel le module convertisseur de gaz d'échappement (1) peut pivoter par rapport au tronçon de conduite ;
d) pivotement du module convertisseur de gaz d'échappement (1) autour de l'axe de pivotement (S), le support côté module (4) et le support côté moteur (3) arrivant dans une position de montage dans laquelle le support côté module (4) est assemblé au support côté moteur (3) ;
e) le module convertisseur de gaz d'échappement (1) étant assemblé au tronçon de conduite de manière à résister à la torsion ;
f) l'assemblage entre le support côté module (4) et le support côté moteur (3) étant formé par des assemblages vissés (11, 12) qui, après l'assemblage - résistant à la torsion - du module convertisseur de gaz d'échappement (1), est serré avec un couple final, un premier assemblage vissé (11) comprenant un boulon (7) qui est situé à une certaine distance du support côté moteur (3) et qui, lors du pivotement dans la position de montage, pénètre dans un trou (8) du support côté module (4), le support côté module (4) étant orienté en position lors de la première étape par le vissage d'un écrou sur le boulon (7) avant que le boulon soit serré avec un couple final et un assemblage vissé (12) comprenant un boulon (10) qui dépasse du support côté module (4) et qui est déplacé lors du pivotement dans une rainure (21) du support côté moteur (3), le boulon (10) du support côté module (4) étant vissé au support côté moteur (3) au moyen d'un écrou.

2. Procédé selon la revendication 1, **caractérisé en ce que** le tronçon de conduite et le module convertisseur de gaz d'échappement (1) sont pressés l'un contre l'autre par une bride entourant ces deux éléments.

3. Dispositif de fixation d'un module de gaz d'échappement à un moteur à combustion (1) d'un véhicule automobile, comprenant un support côté moteur (3), qui est assemblé au moteur à combustion (1), et un support côté module (4), qui est adapté au support côté moteur (3) et qui est assemblé au module de gaz d'échappement (1), un orifice d'entrée (5) du module de gaz d'échappement (1) pouvant être couplé à un tronçon de conduite de la ligne d'échappement qui est situé en amont dans le sens d'écoulement du gaz d'échappement, le module de gaz d'échappement (1) et le tronçon de conduite définissant un axe de pivotement (S) autour duquel le module de gaz d'échappement (1) peut pivoter par rapport au tronçon de conduite dans une position de montage dans laquelle le support côté module (4) s'appuie contre le support côté moteur (3) et dans laquelle le support côté module (4) peut être vissé au support côté moteur (3) par l'intermédiaire d'au moins un assemblage vissé (11, 12), **caractérisé en ce qu'**un premier assemblage vissé (11) comprend un boulon (7) qui est à une certaine distance du support côté moteur (3) et qui traverse un trou (8) du support côté module (4) dans la position de montage afin d'être vissé au support côté module (4) par l'intermédiaire d'un écrou, le module de gaz d'échappement (1) étant un module convertisseur de gaz d'échappement sous forme de catalyseur de gaz d'échappement, un autre assemblage vissé (12) comprenant un boulon (10) qui dépasse du support côté module (4) et qui pénètre dans une rainure marginale (21) du support côté moteur (3) lors du pivotement et peut être vissé au support côté moteur (3) par un écrou, les boulons (7, 10) pointant dans différentes directions spatiales.

4. Dispositif selon la revendication 3, **caractérisé en ce que** le trou (8) est conçu comme un trou oblong.

5. Dispositif selon l'une des revendications 3 ou 4, **caractérisé en ce que** le support côté module (4) est conçu en deux parties et comporte un support inférieur (9) éloigné d'un support supérieur (6).

6. Dispositif selon la revendication 5, **caractérisé en ce que** les supports (6, 9) sont assemblés par concordance de matière au module convertisseur de gaz d'échappement (1).

7. Dispositif selon l'une des revendications 3 à 6, **caractérisé en ce que** les boulons (7, 10) sont agencés dans des trous oblongs (18, 20).

8. Dispositif selon la revendication 7, **caractérisé en ce que** les trous oblongs (18, 20) tenant les boulons (7, 10) ont une orientation différente de celle du trou (8) conçu comme trou oblong dans le support côté module (4) et de celle de la rainure (21) dans le support côté moteur (3).

9. Dispositif selon la revendication 7 ou 8, **caractérisé en ce que** les boulons (7, 10) sont tenus par des cages (17, 19) dans les trous oblongs (18, 20) de manière à ne pas pouvoir être perdus, les cages (17, 19) étant conçues de telle sorte que les boulons (7, 10) peuvent être déplacés dans le sens de la longueur des trous oblongs (18, 20).

10. Dispositif selon l'une des revendications 3 à 9, **caractérisé en ce que** le support côté moteur (3) est conçu globalement en forme de U, avec une partie arrière (13) qui sert à la fixation du support côté moteur (3) au moteur à combustion (2) et avec des barres de liaison (14, 15) qui sont coudées par rapport à la partie arrière (13) et sur les extrémités (16, 23) desquelles les assemblages vissés (11, 12) sont prévus.

11. Dispositif selon la revendication 10, **caractérisé en ce que** la barre de liaison (15) comporte la rainure terminale (21) pour le boulon (10) du support inférieur du support côté module (4) ainsi qu'un biseau (22) sur lequel glisse le support inférieur (9) lors du pivotement dans la position de montage avant que le boulon (10) passe dans la rainure (21).
